# EUROPÄISCHE PATENTSCHRIFT

(11) **EP 0 844 467 B1**
(45) Veröffentlichungstag und Bekanntmachung des Hinweises auf die Patenterteilung: **29.12.2004**
(21) Anmeldenummer: 97120155.3
(22) Anmeldetag: 18.11.1997
(51) Int. Cl.: G01K 7/42, G01K 5/32

(54) **Verfahren zur Nachbildung und Anzeige der Wicklungstemperatur eines elektrischen Leistungstransformators und Thermometer zur Durchführung des Verfahrens**
Method for the reproduction and display of the temperature of the windings of an electrical power transformer and thermometer for implementing this method
Procédé pour reproduire et afficher la température des enroulements d'un transformateur de puissance électrique et thermomètre pour sa mise en oeuvre

(30) Priorität: 22.11.1996 DE 19648332
(43) Veröffentlichungstag der Anmeldung: 27.05.1998
(73) Patentinhaber: Maschinenfabrik Reinhausen GmbH, 93059 Regensburg (DE)
(72) Erfinder: Urich, Manfred, Dipl.-Ing., 61250 Usingen (DE)
(74) Vertreter: Meier, Gerald Heinz

(56) Entgegenhaltungen:
- DE-U- 8 911 078
- GB-A- 561 918
- US-A- 4 336 713

## Beschreibung

Die Erfindung betrifft ein Verfahren zur Nachbildung und Anzeige der Wicklungstemperatur eines elektrischen Leistungstransformators, wobei die von einem Messwandler ermittelte und angezeigte Temperatur aus der Temperatur des Kühlmittels zur Kühlung des Leistungstransformators und der Temperatur einer elektrischen Heizung gebildet wird, die mit einem der Belastung des Leistungstransformators proportionalen Strom versorgt wird.

Die Erfindung betrifft weiterhin ein Thermometer zur Durchführung des Verfahrens, das einen hohlen Messfühler, einen durch ein Kapillarrohr mit dem Messfühler verbundenen mechanischen Messwandler zur Betätigung einer mechanischen Anzeigevorrichtung und/oder eines oder mehrerer Schalter aufweist, wobei die miteinander verbundenen Hohlräume von Messfühler, Kapillarrohr und Messwandler einen geschlossenen Druckraum bilden, der mit einem Messmedium gefüllt ist, dessen Druck sich in Abhängigkeit von der Temperatur ändert.

Ein Verfahren der eingangs genannten Art ist aus der EP 0 335 904 bereits bekannt. Es ermöglicht die Nachbildung der Wicklungstemperatur eines Leistungstransformators entsprechend der jeweiligen Transformatorbelastung. An Hand dieser nachgebildeten Temperatur kann die Kühlung des Transformators gesteuert und bei Erreichen eines Maximalwertes der Transformator abgeschaltet werden.

Ein weiteres Verfahren der angegebenen Art ist aus der GB 561 918 bekannt. Dabei wird das in einem Messfühler befindliche Messmedium zusätzlich aufgeheizt, so dass im Messfühler eine höhere als die tatsächlich gemessene Temperatur des Umgebungsmediums erfasst wird. Aus dieser Schrift ist auch bereits ein für dieses Verfahren geeignetes Thermometer bekannt. Die dort beschriebene Temperaturanzeige besitzt einen doppelwandigen Messfühler, der in einer Transformatortasche des entsprechenden Leistungstransformators angeordnet ist und mit einem Messmedium gefüllt ist, dessen Druck sich in Abhängigkeit von der Temperatur ändert. Zusätzlich ist in diesem Messfühler, das Messmedium umschließend, eine Widerstandsheizung vorgesehen, mittels der eine zusätzliche Erhitzung des Messmediums erfolgt. Zwischen dem Messfühler und dem eigentlichen Anzeigegerät, das eine Bourdonfeder aufweist, ist ein Kapillarrohr eingefügt.

Ein weiteres Verfahren der eingangs genannten Art sowie ein geeignetes Thermometer sind aus der DE 89 11 078 U1 bekannt. Dabei ist in einer Tauchhülse für den Einbau in einen mit Kühlflüssigkeit gefüllten Transformatorenkessel ein hohler Meßfühler angeordnet, der von einem Isolierschlauch umgeben ist. Der Isolierschlauch ist mit einem elektrischen Heizwiderstand umwickelt, der wiederum von einem Isolierschlauch umgeben ist. Mit Hilfe eines Stromwandlers wird ein der Belastung des Transformators proportionaler Strom über den Heizwiderstand geleitet, dessen Größe derart auf den Heizwiderstand und den Wärmedurchgang in Richtung Meßfühler und Kühlmittel eingestellt ist, daß die von dem Meßfühler gemessene Temperatur der jeweiligen mittleren oder maximalen Wicklungstemperatur des Leistungstransformators entspricht. Diese bekannte Einrichtung hat sich in der Praxis bewährt. Sie hat jedoch den Nachteil, daß eine vergleichsweise große Heizleistung des Heizwiderstanddrahtes benötigt wird, so daß auch die Schaltung zur Anpassung der Heizleistung an die spezifischen Parameter des Leistungstransformators verhältnismäßig aufwendig und teuer ist.

Aus der US 4,336,713 ist schließlich eine temperaturkompensierte Temperaturmesseinrichtung bekannt. Um ein zuverlässiges Arbeiten auch unter extremen Umgebungstemperaturen zu gewährleisten, ist eine zusätzliche Heizquelle angeordnet, die das Messmedium, hier ein Messgas, künstlich heizt. Die Menge der zugeführten Wärmeenergie ist dabei abhängig vom Messfehler zwischen der erfassten und der tatsächlichen Temperatur und kompensiert damit die gesamte Anordnung.

Der Erfindung liegt die Aufgabe zugrunde, ein Verfahren der eingangs genannten Art anzugeben, das mit einem einfachen und geringen gerätetechnischen Aufwand eine genaue und schnelle Nachbildung der Wicklungstemperatur eines Leistungstransformators ermöglicht.

Der Erfindung liegt weiterhin die Aufgabe zugrunde, ein für die Durchführung eines solchen Verfahrens besonders geeignetes Thermometer anzugeben.

Die Aufgabe wird erfindungsgemäß gemäß durch ein Verfahren nach Anspruch 1 gelöst, bei dem mit Hilfe des Meßfühlers die Temperatur des Kühlmittels des Leistungstransformators unmittelbar gemessen wird und bei dem durch eine von der Messung der Temperatur des Kühlmittels getrennte, direkte Erwärmung des Meßmediums mit Hilfe einer in das Meßmedium eingetauchten elektrischen Heizung ein der Wicklungstemperatur des Leistungstransformators entsprechender Meßdruck erzeugt wird.

Bei dem erfindungsgemäßen Verfahren erfolgt die zur Nachbildung der Wicklungstemperatur erforderliche Wärmeübertragung auf das Meßmedium durch das Kühlmittel und die elek-trische Heizung auf folgende Weise : Der Meßfühler erfaßt die Temperatur des Kühlmittels des Leistungstransformators und erzeugt dadurch im Meßmedium einen dieser Temperatur entsprechenden Basisdruck. Durch die hiervon getrennte Erwärmung des Meßmediums mit Hilfe der elektrischen Heizung, deren Wärmeabgabe der Belastung des Leistungstransformators proportional ist, wird der Druck im Meßmedium um den Betrag erhöht, der der jeweiligen Sprungtemperatur zwischen Kühlmitteltemperatur und Wicklungstemperatur entspricht. Das erfindungsgemäße Verfahren hat den Vorteil, daß die erforderliche Leistung der Heizung erheblich reduziert werden kann, wobei die von der Heizung abgegebene Wärme unmittelbar dem Meßmedium zugeführt wird und Wärmeverluste durch geeignete Isolierung der beheizten Kammer klein gehalten werden können. Entsprechend der geringen Heizleistung kann auch der Bauaufwand für die Heizung und für die elektrischen Bauelemente der dazugehörigen Stromversorgung verringert werden. Ein weiterer Vorteil des erfindungsgemäßen Verfahrens besteht darin, daß die Nachbildung der Wicklungstemperatur und auch die Anpassung des Systems an die trafospezifischen Parameter ausschließlich mit passiven Bauelementen in der Stromzuführung der Heizung erreicht werden kann. Die Möglichkeit, aktive Schaltungen in das System einzubinden ist jedoch gleichwohl gegeben.

Die Aufgabe wird weiterhin durch ein Thermometer nach Anspruch 2 zur Durchführung des erfindungsgemäßen verfahrens gelöst, bei dem die elektrische Heizung in einer isolierten Heizkammer angeordnet ist, die durch ein Kapillarrohr an den gemeinsamen Druckraum von Meßfühler und Meßwandler angeschlossen ist. Die Heizkammer kann hierbei auf vorteilhafte Weise in dem die Temperaturanzeige und den mechanischen Meßwandler aufnehmenden Thermometergehäuse angeordnet sein.

Um zusätzlich zur örtlichen Temperaturanzeige ein zur Fernübertragung geeignetes, den jeweiligen Temperaturmeßwert wiedergebendes Meßsignal zur Verfügung stellen zu können, kann nach einer weiteren vorteilhaften Weiterbildung an das Kapillarrohr zusätzlich ein elektrischer Meßwandler angeschlossen sein, der eine von einem formsteifen Gehäuse umgebene Meßkammer, eine die _{M}eßkammer begrenzende elektrische Druckmeßzelle und einen an die Druckmeßzelle angeschlossenen elektrischen Meßwertumformer zur Erzeugung eines übertragbaren Signals aufweist.

Die Erfindung wird nachfolgend anhand von Ausführungsbeispielen näher erläutert, die in der Zeichnung dargestellt sind. Es zeigen
- Figur 1: eine Seitenansicht, teilweise geschnitten, eines erfindungsgemäßen Thermometers mit einer im Thermometergehäuse angeordneten Heizung,
- Figur 2: einen Querschnitt durch die beheizte Heizkammer des Thermometers gemäß Figur 1,

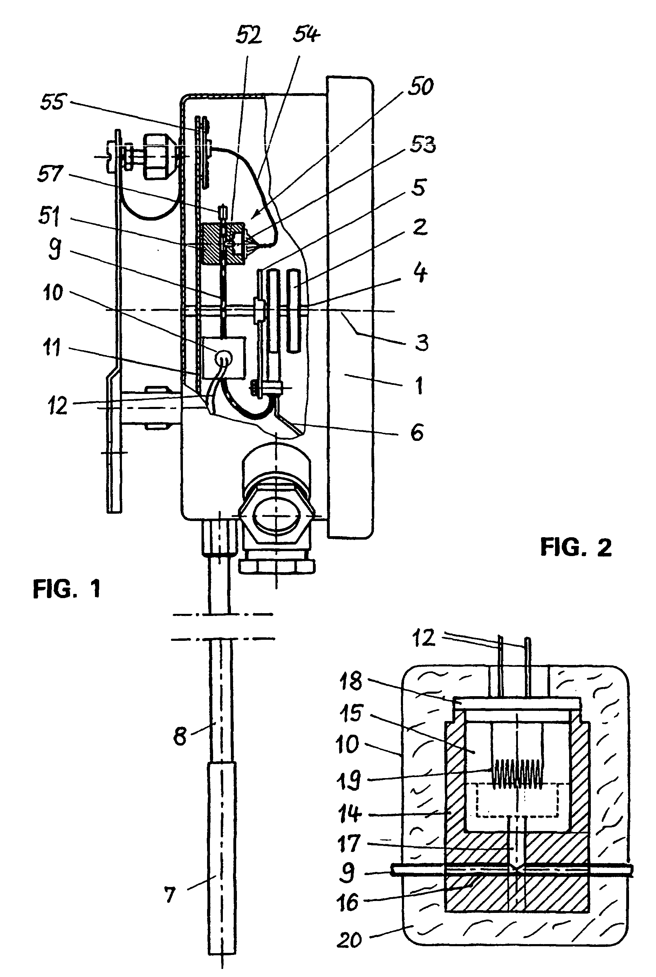

Das in Figur 1 dargestellte Thermometer besteht aus einem topfförmigen Gehäuse 1, das einen mechanischen Meßwandler 2 in Form einer Bourdonfeder enthält, der um eine zentrale Achse 3 angeordnet ist und dessen bewegliches Ende durch eine Welle 4 mit einem drehbaren Zeiger verbunden ist, der zur Temperaturanzeige und zur Betätigung von Grenzwertschaltern dient. Das feststehende Ende des Meßwandlers 2 ist an einer gehäusefesten Platte 5 gehalten und durch ein Kapillarrohr 6 mit einem Meßfühler 7 verbunden. Der Meßfühler 7 ist außerhalb des Gehäuses 1 am Ende eines flexiblen, rohrförmigen Trägerelements 8 angebracht, durch den das Kapillarrohr 6 geführt ist. Durch ein weiteres Kapillarrohr 9 ist der Meßwandler 2 mit einer isolierten Heizkammer 10 verbunden, die an einer Platte 11 im Gehäuse 1 befestigt ist. Elektrische Anschlußleitungen 12 verbinden die in der Heizkammer 10 angeordnete, elektrische Heizung mit einer nicht dargestellten Klemmenleiste, an der die Heizung mit einer Stromversorgung verbindbar ist.

Wie aus Figur 2 zu ersehen, weist die Heizkammer 10 ein metallisches Gehäuse 14 mit einer zentralen Kammerbohrung 15, einer senkrecht zu dieser verlaufenden Durchgangsbohrung 16 und einer die Kammerbohrung 15 mit der Durchgangsbohrung 16 verbindenden Anschlußbohrung 17 auf. Das offene Ende der Kammerbohrung 15 ist durch einen Stopfen 18 mit einer Glasdurchführung für die Anschlußleitungen druckdicht verschlossen, der aus einem temperaturbeständigen, elektrisch nicht leitenden Werkstoff besteht und eine in der Kammerbohrung 15 angeordnete, elektrische Heizung 19 trägt, die mit den Anschlußleitungen 12 verbunden ist. Auf seiner Außenseite ist das Gehäuse 14 mit einem wärmeisolierenden Mantel 20 umgeben. Die beiden Abschnitte des Kapillarrohrs 9 werden in die Durchgangsbohrung 16 einund auf beiden Seiten durch Löten oder Schweißen in der Durchgangsbohrung 16 druckdicht befestigt. An der Mündung der Anschlußbohrung 17 sind die beiden Abschnitte des Kapillarrohrs 9 mit einer Öffnung versehen.

Von der Heizkammer 10 führt das Kapillarrohr 9 zu einem elektrischen Meßwandler 50. Das Ende des Kapillarrohrs 9 erstreckt sich durch eine Durchgangsbohrung im Gehäuse 51 des Meßwandlers 50 und ist in dieser durch Löten oder Schweißen druckdicht befestigt. Innerhalb der Durchgangsbohrung ist das Kapillarrohr 9 unterbrochen oder mit einer Öffnung versehen, wodurch eine Verbindung zu einer von der Durchgangsbohrung senkrecht abzweigenden Gehäusebohrung 52 hergestellt ist, deren Ende durch eine Druckmeßzelle 53 verschlossen ist. Durch eine elektrische Anschlußleitung 54 ist die Druckmeßzelle 53 mit einem Meßwertumformer 55 verbunden, der auch elektronische Grenzwertschalter aufweisen kann. Das Gehäuse 51 und der Meßwertumformer 55 sind gemeinsam auf einer Platte 11 im Inneren des Gehäuses 1 befestigt. Das freie, aus dem Gehäuse 51 hervorstehende Ende 57 des Kapillarrohrs 9 ist nach dem Einfüllen des flüssigen Meßmediums zur Erzeugung einer temperaturabhängigen Druckänderung durch Schweißen oder Löten dicht verschlossen.

Zur Bestimmung der Wicklungstemperatur eines Leistungstransformators wird der Meßfühler 7 des beschriebenen Thermometers in die Thermometertasche des Transformatorkessels eingebaut und die elektrische Heizung 19 in der Heizkammer 10 an den Stromwandler des Transformators angeschlossen. Die Anpassung des Heizstroms an die spezifischen Parameter des Transformators erfolgt durch eine zwischen dem Stromwandler und der Heizung angeordnete Schaltung, die z.B. als Widerstandsnetzwerk ausgebildet sein und einen zusätzlichen Zwischenstromwandler enthalten kann. Im Betrieb zeigt das Thermometer eine Temperatur an, die sich aus der Addition der Temperatur des Meßfühlers 7 und der Temperatur in der Heizkammer ergibt und die aufgrund der Heizkammer und der elektrischen Heizung mit der vorgeschriebenen Zeitkonstante die Wicklungstemperatur des Transformators nachbildet.

## Patentansprüche

1. Verfahren zur Nachbildung und Anzeige der Wicklungstemperatur eines elektrischen Leistungstransformators unter Verwendung eines Thermometers, das einen hohlen Meßfühler, einen durch ein Kapillarrohr mit dem Meßfühler verbundenen mechanischen Meßwandler zur Betätigung einer mechanischen Anzeigevorrichtung und/oder eines oder mehrerer Schalter hat, wobei die miteinander verbundenen Hohlräume von Meßfühler, Kapillarrohr und Meßwandler einen geschlossenen Druckraum bilden, der mit einem Meßmedium gefüllt ist, dessen Druck sich in Abhängigkeit von der Temperatur ändert, bei welchem Verfahren die von dem Meßwandler ermittelte und angezeigte Temperatur aus der Temperatur des Kühlmittels zur Kühlung des Leistungstransformators und der Temperatur einer elektrischen Heizung gebildet wird, die mit einem der Belastung des Leistungstransformators proportionalen Strom versorgt wird, und mit Hilfe des Meßfühlers die Temperatur des Kühlmittels des Leistungstransformators unmittelbar gemessen wird, **dadurch gekennzeichnet, daß** durch eine von der Messung der Temperatur des Kühlmittels getrennte, direkte Erwärmung des Meßmediums mit Hilfe der in das Meßmedium eingetauchten elektrischen Heizung ein der Wicklungstemperatur des Leistungstransformators entsprechender zusätzlicher Meßdruck erzeugt wird.

2. Thermometer zur Durchführung des Verfahrens nach Anspruch 1, das einen hohlen Meßfühler (7), einen durch ein Kapillarrohr (6) mit dem Meßfühler verbundenen mechanischen Meßwandler (2) zur Betätigung einer mechanischen Anzeigevorrichtung und/oder eines oder mehrerer Schalter aufweist, wobei die miteinander verbundenen Hohlräume von Meßfühler (7), Kapillarrohr (6) und Meßwandler (2) einen geschlossenen Druckraum bilden, der mit einem Meßmedium gefüllt ist, dessen Druck sich in Abhängigkeit von der Temperatur ändert und wobei die von dem Meßwandler (2) ermittelte und angezeigte Temperatur teilweise von einer elektrischen Heizung (19) gebildet wird, die mit einem der Belastung eines Leistungstransformators proportionalen Strom belastbar ist, **dadurch gekennzeichnet, daß** die elektrische Heizung (19) in einer nicht isolierten oder isolierten Heizkammer (10) angeordnet ist, die durch ein weiteres Kapillarrohr (9) an den gemeinsamen Druckraum von Meßfühler (7), Kapillarrohr (6) und Meßwandler (2) angeschlossen ist.

3. Thermometer nach Anspruch 2, **dadurch gekennzeichnet, daß** die Heizkammer (10) in einem die Temperaturanzeige und den mechanischen Meßwandler (2) aufnehmenden Thermometergehäuse (1) angeordnet ist.

4. Thermometer nach Anspruch 2 oder 3, **dadurch gekennzeichnet, daß** an das weitere Kapillarrohr (9) zusätzlich ein elektrischer Meßwandler (50) angeschlossen ist, der eine von einem formsteifen Gehäuse umgebene Meßkammer (52), eine die Meßkammer (52) begrenzende elektrische Druckmeßzelle (53) und einen an die Druckmeßzelle (53) angeschlossenen elektrischen Meßwertumformer (55) zur Erzeugung eines übertragbaren Signals aufweist.

## Claims

1. Method for the simulation and display of the winding temperature of an electric power transformer, featuring a thermometer which has a cavity sensor, a mechanical instrument transformer connected to the sensor by means of a capillary tube for the actuation of a mechanical indicator device and/or one or more switches, whereby the interconnected cavities of the sensor, capillary tube and instrument transformer form an enclosed pressure space which is filled with a measuring medium, the pressure of which changes with changes in temperature, whereby in this method the temperature ascertained and indicated by the instrument transformer is derived from the temperature of the coolant for the cooling of the power transformer and the temperature of an electric heater, supplied with current proportional to the load of the power transformer, and the temperature of the coolant in the power transformer is measured directly with the aid of the sensor, **characterized in that**, wholly separately from the measurement of the temperature of the coolant, the measuring medium is heated directly by an electric heater immersed in the measuring medium to generate additional measuring pressure corresponding to the winding temperature of the power transformer.

2. Thermometer for the realization of the method in accordance with Claim 1, featuring a cavity sensor (7), a mechanical instrument transformer (2) connected to the sensor by means of a capillary tube (6) for the actuation of a mechanical Indicator device and/or one or more switches, whereby the interconnected cavities of the sensor (7), capillary tube (6) and instrument transformer (2) form an enclosed pressure space which is filled with a measuring medium, the pressure of which changes with changes in temperature, and whereby the temperature ascertained and indicated by the instrument transformer (2) is derived partially from an electric heater (19), supplied with current proportional to the load of the power transformer, **characterized in that** the electric heater (19) is located in a non-insulated or an insulated heating chamber (10) which is connected to the joint pressure space of the sensor (7), capillary tube (6) and instrument transformer (2) by a further capillary tube (9).

3. Thermometer in accordance with Claim 2, **characterized in that** the heating chamber (10) is positioned in a thermometer case (1) which holds the temperature indicator and the mechanical instrument transformer (2).

4. Thermometer in accordance with Claim 2 or 3, **characterized in that** an electric instrument transformer (50) is additionally connected to the additional capillary tube (9), the additional electric instrument transformer featuring a measuring chamber (52) enclosed by a rigid case, an electric pressure measuring cell (53) limiting the measuring chamber (52) and an electric measuring transducer (55) connected to the pressure measuring cell (53) for generating a transferable signal.

## Revendications

1. Procédé de représentation et d'indication de la température des enroulements d'un transformateur de puissance électrique à l'aide d'un thermomètre présentant un capteur creux et un transducteur mécanique relié au capteur par un tube capillaire et destiné à l'actionnement d'un dispositif d'indication mécanique et/ou d'un ou de plusieurs détecteurs, les cavités communicantes du capteur, du tube capillaire et du transducteur formant une enceinte remplie d'un fluide de mesure dont la pression varie en fonction de la température, procédé dans lequel la température déterminée et indiquée par le transducteur est obtenue à partir de la température du liquide de refroidissement du transformateur et de la température d'un chauffage électrique alimenté par un courant proportionnel à la charge du transformateur, et dans lequel on mesure directement, à l'aide du capteur, la température du liquide de refroidissement du transformateur, **caractérisé en ce que**, par un échauffement direct du fluide de mesure, séparé de la mesure de la température du liquide de refroidissement, à l'aide d'un chauffage électrique plongeant dans le fluide de mesure, on génère une pression de mesure additionnelle correspondant à la température des enroulements du transformateur.

2. Thermomètre de mise en oeuvre du procédé selon la revendication 1, présentant un capteur creux (7) et un transducteur mécanique (2) relié au capteur par un tube capillaire (6) et destiné à l'actionnement d'un dispositif d'indication mécanique et/ou d'un ou de plusieurs détecteurs, les cavités communicantes du capteur (7), du tube capillaire (6) et du transducteur (2) formant une enceinte remplie d'un fluide de mesure dont la pression varie en fonction de la température, et la température déterminée et indiquée par le transducteur (2) étant obtenue en partie par un chauffage électrique (19) alimentable par un courant proportionnel à la charge d'un transformateur de puissance, **caractérisé en ce que** le chauffage électrique (19) est disposé dans une chambre de chauffage (10) isolée ou non Isolée, raccordée par un autre tube capillaire (9) à l'enceinte commune du capteur (7), du tube capillaire (6) et du transducteur (2).

3. Thermomètre selon la revendication 2, **caractérisé en ce que** la chambre de chauffage (10) est disposée dans un boîtier (1) abritant l'indlcateur de température et le transducteur mécanique (2).

4. Thermomètre selon la revendication 2 ou 3, **caractérisé en ce qu'**à l'autre tube capillaire (9), est en outre raccordé un transducteur électrique (50) présentant une chambre de mesure (52) entourée d'un boîtier de forme rigide, une capsule manométrique électrique (53) limitant la chambre de mesure (52) et un transmetteur électrique (55) raccordé à la capsule manométrique (52) et destiné à générer un signai transmissible
